# EUROPEAN PATENT APPLICATION

(11) **EP 4 822 169 A1**
(43) Date of publication of application: **14.10.2026**
(21) Application number: 26167944.3
(22) Date of filing: 26.03.2026
(51) Int. Cl.: F02M 35/12, B60R 13/00, G10K 11/22

(54) **MOTOR VEHICLE WITH IMPROVED SOUND CONVEYOR IN THE PASSENGER COMPARTMENT**

(30) Priority: 31.03.2025 IT 202500006762; 31.03.2025 IT 202500006771
(71) Applicant: FERRARI S.p.A., 41100 Modena (IT)
(72) Inventor: MASSARO ELIA, Tiziano, 41100 MODENA (IT); CAROSONE, Francesco, 41100 MODENA (IT); CIRILLO, Maddalena, 41100 MODENA (IT); PALERMO, Antonio, 41100 MODENA (IT); PEDRAZA CASTRO, Tomas, 41100 MODENA (IT)
(74) Representative: Studio Torta S.p.A.

(57) **Abstract**

A motor vehicle (1) includes an engine (8), an engine compartment (6), a passenger compartment (5), a firewall (15), an interior trim panel (16), a compartment (21) between the trim panel (16) and the firewall (15), a sound conveying duct (22) having an inlet (23) in the engine compartment (6) and extending according to at least one distribution portion (32) along a first axis (K) up to dividing at a division node into at least two disjoint branches (34) extending in the compartment (21) along respective branch axes (W) up to discharging in one or more through-openings (36) of the trim panel (16) with respective divergent portions (35), characterized by further comprising lateral ducts (41) having connecting portions (42) connecting respectively to the branches (34) with a configuration parallel to the divergent portions (35) and extending along respective second axes (H) from the connecting portions (42) up to discharging respectively at second through-openings (40) of the trim panel (16), the second through-openings (40) communicating with the passenger compartment (5).

## Description

### CROSS-REFERENCE TO RELATED APPLICATIONS

This patent application claims priority from Italian patent application no. 102025000006762 and from Italian patent application no. 102025000006771 both filed on March 31, 2025, the entire disclosure of which is incorporated herein by reference.

### TECHNICAL FIELD

The invention relates to a motor vehicle and, more in particular, to a sound conveying assembly for conveying sounds generated inside an engine compartment of the motor vehicle towards a passenger compartment of the motor vehicle through a firewall of the motor vehicle.

### PRIOR ART

As is known, the engine compartment of a motor vehicle is separated from the passenger compartment by means of a wall of the chassis, called firewall.

In general, in the sector of motor vehicles, especially of the sports type, the need is felt for the sounds produced by the engine installed in the engine compartment to be perceived by the driver as authentically as possible, so that the driving pleasure of the driver results to be increased therefrom.

The firewall inevitably constitutes an element that hinders the transmission of the sound from the engine compartment to the passenger compartment, so that the sound actually perceived in the passenger compartment results to be deadened in intensity with respect to the original sound produced by the engine in the engine compartment, for example across the entire frequency spectrum of the original sound.

For this reason, some motor vehicles have sound conveying assemblies or systems that include one or more ducts which start from the engine compartment to receive the sound at the inlet and terminate at one or more openings on an interior trim panel that faces the passenger compartment directly on one side and faces the firewall on the other.

The interior trim panel and the firewall close a compartment between them, which in turn is interposed between the engine compartment and the passenger compartment.

The ducts pass through the firewall and extend inside the compartment up to terminating with the openings on the interior trim panel.

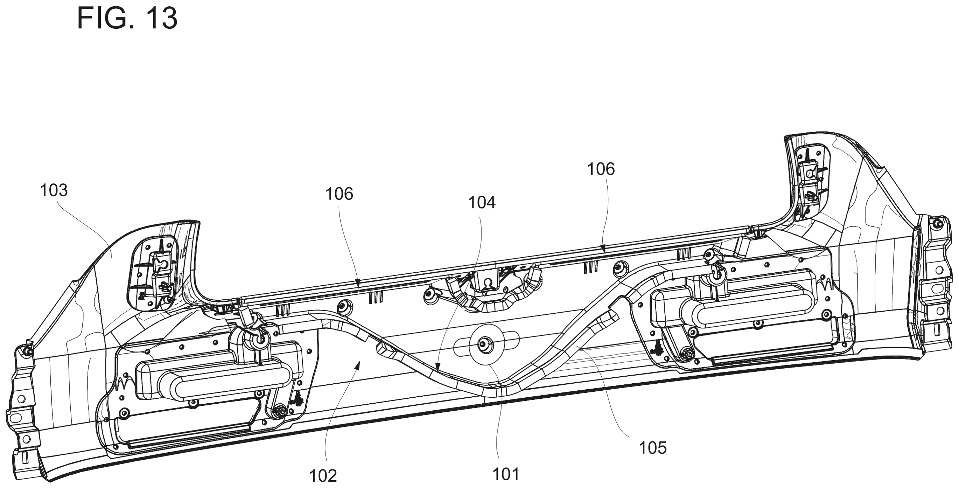

For example, a previous solution by the Applicant, shown in Figure 13, provides for an inlet pipe 101 extending through a firewall (not illustrated) to terminate inside a compartment 102 defined between the firewall and an interior trim panel 103, of which only the face facing the firewall is visible.

The inlet pipe 101, having cross-sections with a substantially constant area along the longitudinal axis, discharges on a free volume 104 defined by a single bell-shaped casing 105.

By cross-sectioning the inlet pipe 101 at the end that discharges in the free volume 104 with an end cross-plane, the area of the end cross-section of the inlet pipe 101 is much smaller than the area of the free volume 104 belonging to the same end cross-plane.

The free volume 104 communicates with two through-openings 106 of the interior trim panel 103 intended to communicate with the passenger compartment of the motor vehicle.

In this manner, the sound produced in the engine compartment can pass into the passenger compartment by means of the inlet pipe 101, the free volume 104 and the through-openings 106, in this order of succession.

Nevertheless, although the firewall can be thereby bypassed, the sound in the passenger compartment arrives anyway with a certain degree of deadened intensity with respect to the original sound; the deadening can also be significant for some specific frequencies within the frequency spectrum of the original sound.

Therefore, the need is felt to provide an improved sound conveying assembly, particularly in the sense of reducing the deadening and increasing the similarity of the sound transmitted to the passenger compartment with respect to the original sound.

An object of the invention is to satisfy the need set forth above, preferably in a simple and repeatable manner.

### DESCRIPTION OF THE INVENTION

The object is achieved by a motor vehicle as defined in claim 1.

The dependent claims define particular embodiments of the invention.

### BRIEF DESCRIPTION OF THE DRAWINGS

In the following, an embodiment of the invention is described for a better understanding of the same by way of non-limiting example and with reference to the accompanying drawings wherein:
- Figure 1 is a perspective view of a motor vehicle according to the invention, with parts in transparency for clarity,

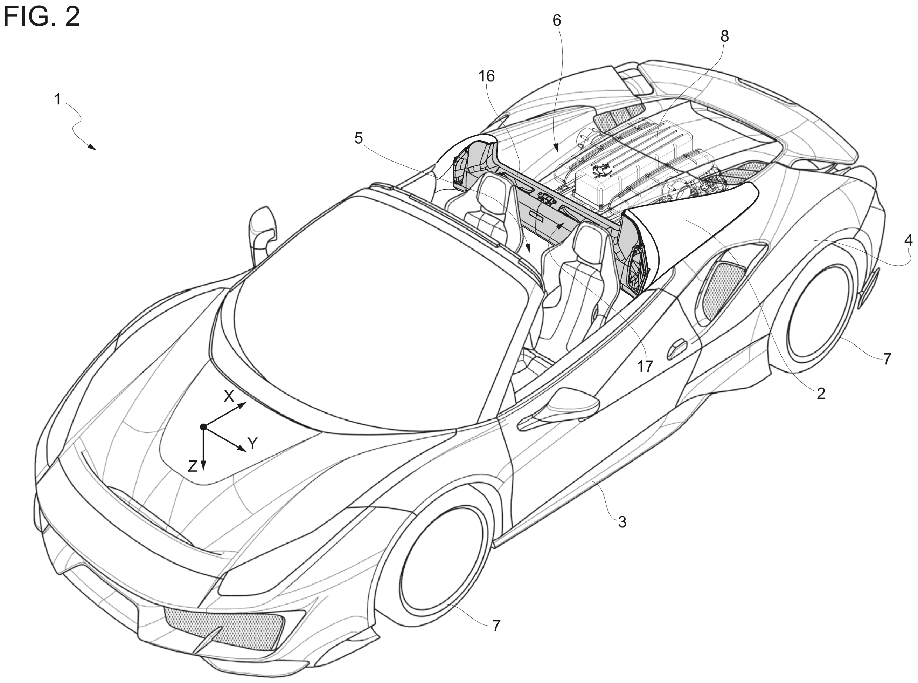

- Figure 2 is similar to Figure 1, with a roof of the motor vehicle removed for clarity,

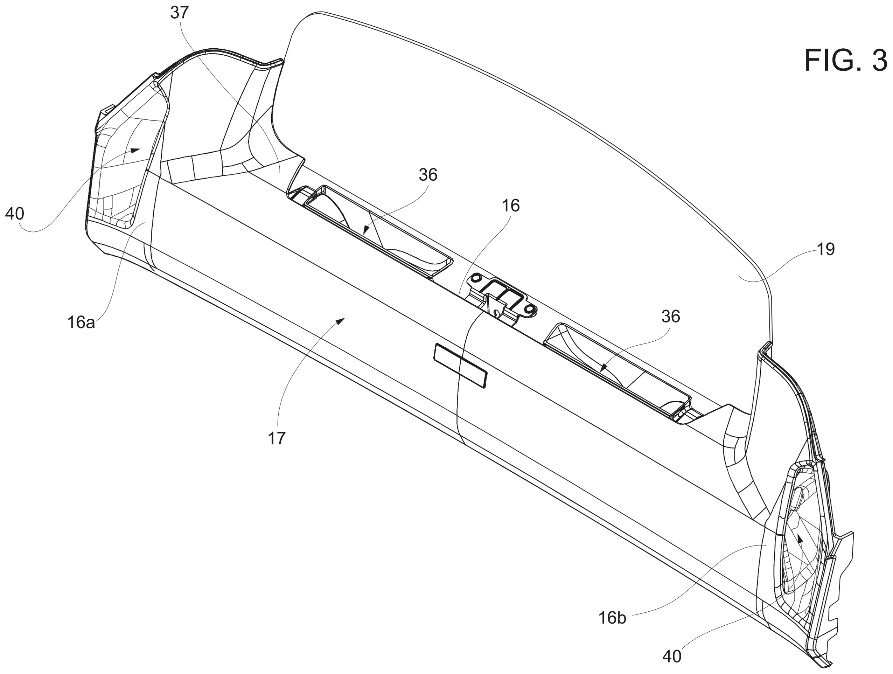

- Figure 3 is an enlarged perspective view of a zone of a rear window of the motor vehicle, on the side of a passenger compartment of the motor vehicle,

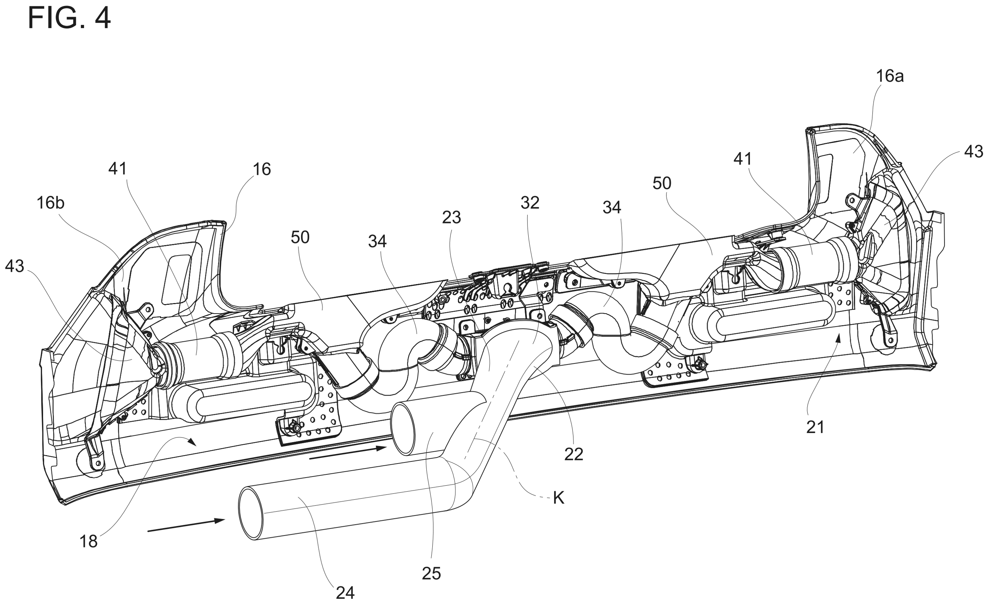

- Figure 4 is a perspective view of the rear of the zone shown in Figure 3, so that a sound conveying assembly of the motor vehicle is visible,
- Figure 5 is a perspective cutaway view of the sound conveying assembly of Figure 4 according to a section plane orthogonal to a direction of advancement of the motor vehicle,
- Figure 6 is a flat section view according to the section plane of Figure 5,

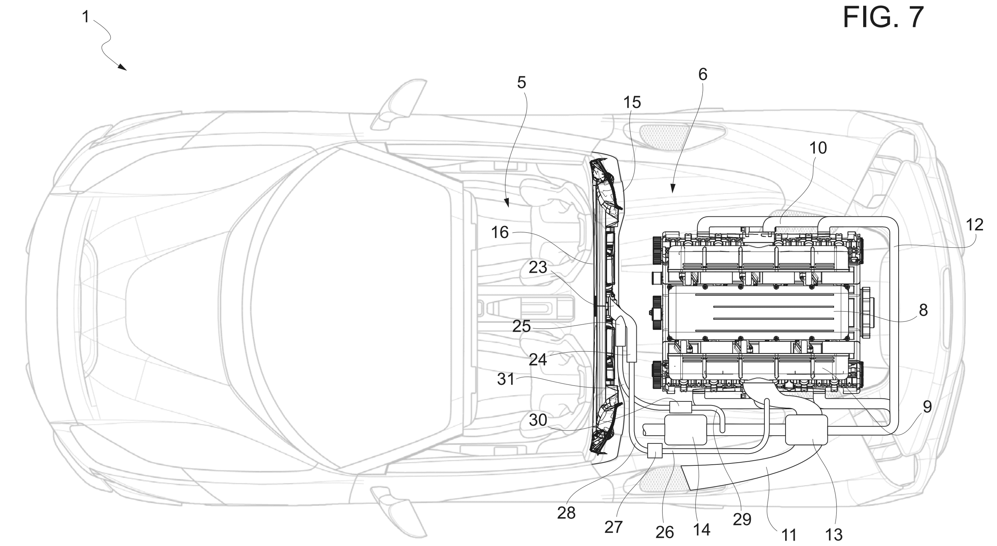

- Figure 7 is a diagram of the sound conveying assembly placed on a plan view of the motor vehicle, with most of the contours in transparency,
- Figures 8, 9 are diagrams representative of test apparatuses for conducting sound level experiments, in which a measurement of the frequency spectrum of sounds coming from a same source and passing through respective ducts is carried out,
- Figure 10 is a sound frequency-intensity graph representing the frequency spectra associated with the measurements carried out with the test apparatuses of Figures 8, 9, respectively,
- Figure 11 is a comparison on a sound frequency-intensity graph between frequency spectra of sounds perceived in the passenger compartments of the motor vehicle according to the invention and of a motor vehicle according to a previous solution by the Applicant,
- Figure 12 is a perspective cutaway view of a portion of the sound conveying assembly of Figure 4 according to a horizontal section plane, and
- Figure 13 is similar to Figure 4 but shows a sound conveying assembly of a motor vehicle according to the previous solution by the Applicant.

### EMBODIMENTS OF THE INVENTION

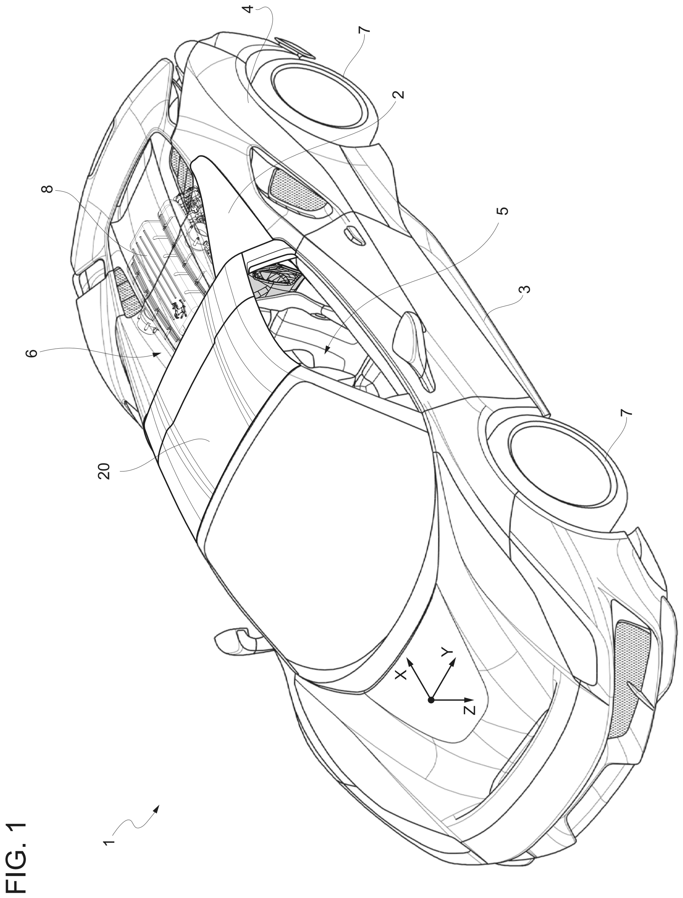

In Figure 1, reference numeral 1 is used to indicate, as a whole, a motor vehicle.

The motor vehicle 1 has a roll axis X or longitudinal axis extending along the direction of advancement of the motor vehicle 1.

Furthermore, the motor vehicle 1 has a horizontal pitch axis Y orthogonal to the roll axis X.

Furthermore, the motor vehicle 1 has a yaw axis Z orthogonal to both axes X, Y. The yaw axis Z has at least one vertical component, namely directed according to the direction of the gravitational force.

The motor vehicle 1 comprises a body 2, in turn comprising a chassis 3, which defines the load-bearing structure or skeleton of the motor vehicle 1, and a bodywork 4 carried by the chassis 3 and defining the outer surfaces of the motor vehicle 1.

The body 2 defines a passenger compartment 5 accessible to a driver and optionally one or more passengers.

The passenger compartment 5 is preferably arranged according to the roll axis X between two compartments, of which at least one of the compartments is an engine compartment 6 of the motor vehicle, here arranged in particular at the back with respect to the passenger compartment 5. The other compartment, optional and therefore not illustrated, could be a trunk for containing objects of various nature.

The motor vehicle 1 is provided with wheels 7, of which at least two aligned according to the axis Y are drive wheels. Specifically, but not necessarily, among the wheels 7 the two rearmost ones according to the roll axis X are the drive wheels.

The motor vehicle 1 generically comprises a propulsion assembly with at least one engine 8, in particular an endothermic engine or an internal combustion engine, and a mechanical transmission (not illustrated) configured to transmit power exiting the engine 8 to the drive wheels among the wheels 7.

The engine 8 is housed in the engine compartment 6. For example, the engine 8 is carried by the chassis 3 in the engine compartment 6, in particular in a suspended manner with respect to the chassis 3, more in particular by means of suspension elements, for example of known type and therefore not illustrated.

More in detail, the engine 8 comprises an intake manifold 9 and an exhaust manifold 10.

The propulsion assembly can comprise for example an intake line 11 to provide air, in particular compressed air, to the intake manifold 9, just as it can comprise an exhaust line 12 to evacuate exhaust gases from the exhaust manifold 10.

The propulsion assembly can comprise a turbocharger 13 having a turbine, which forms part of the exhaust line 12 and is adapted to extract work from the exhaust gases, as well as having a compressor, which forms part of the intake line 11 and is actuated by the work extracted from the turbine to compress the air provided to the intake manifold 9.

The intake line 11 is configured to convey air from the environment outside the motor vehicle towards an inlet of the compressor, such that the compressor provides compressed air at the outlet, and to provide the compressed air from the compressor to the intake manifold 10.

The exhaust line 12 is configured to convey the exhaust gases from the exhaust manifold 10 to the inlet of the turbine, such that the turbine extracts the work from the exhaust gases to actuate the compressor.

Downstream of the turbine, the exhaust line 12 can comprise a post-treatment apparatus 14 configured to treat the exhaust gases exiting the turbine before a discharge of the exhaust gases into the external environment.

The motor vehicle 1 comprises a firewall 15, i.e. a wall delimiting a longitudinal (according to the axis X) end zone of the engine compartment 6, here a front longitudinal end zone.

Furthermore, the motor vehicle 1 comprises an interior trim panel 16, for example arranged to cover the firewall 15 from the inside of the passenger compartment 5.

The interior trim panel 16 has a first face 17 facing, in particular directly, the passenger compartment 5 (in other words, the face 17 is exposed inside the passenger compartment 5).

Furthermore, the interior trim panel 16 has a thickness, in particular along the axis X; the extent of the thickness of the interior trim panel 16 is preferably much smaller than the extent of the same interior trim panel 16 according to the dimensions of width (along the axis Y) and height (along the axis Z).

The interior trim panel 16 also has a second face 18 opposite the first face 17 according to the direction of the thickness, in particular according to the axis X.

The second face 18 faces the firewall 15.

Therefore, the firewall 15 is arranged between the engine compartment 6 and the interior trim panel 16 (precisely the second face 18), in particular according to the axis X.

The motor vehicle 1 thus has a compartment 21 defined or delimited at least in part between the interior trim panel 16 (precisely the second face 18) and the firewall 15, in particular according to the axis X.

The compartment 21 is defined or delimited at least in part (in particular on one side, according to the axis X) by the interior trim panel 16 or more precisely by the second face 18, and/or by the firewall 15 (in particular on the other side, according to the axis X).

In this manner, the firewall 15 separates or divides the compartment 21 from the engine compartment 6, in particular according to the axis X. The separation can also be only conceptual according to the axis X, i.e. is not necessarily total or in a sealed manner; in other words, the compartment 21 could communicate with the engine compartment 6 by means of holes or openings passing through the firewall 15, as well as by means of slits at the edges of the firewall 15.

Preferably, the interior trim panel 16 delimits the passenger compartment 5 at the back.

In particular, the interior trim panel 16 is arranged below a rear window 19 of the motor vehicle 1, in turn arranged below a roof 20 of the motor vehicle 1.

Like the interior trim panel 16, the rear window 19 delimits the passenger compartment 5 at the back.

The motor vehicle 1 further comprises a sound conveying assembly to convey sounds generated inside the engine compartment 6 towards the passenger compartment 5 through the firewall 15. The sound conveying assembly comprises a sound conveying duct 22 having an inlet 23 at the engine compartment 6 to receive one or more sound pressure waves, i.e. one or more sounds.

The sound is a pressure wave which propagates in the air, therefore it can channel in the sound conveying duct 22 through the air present in the sound conveying duct 22.

In the illustrated embodiment, the inlet 23 is conveniently connected to two sound transmission lines 24, 25 configured to provide sound pressure waves to the inlet 23, in particular by generating the sound pressure waves starting from harmonic forces produced by the operation of the engine 8 or the propulsion assembly, and/or by transmitting sound pressure waves generated directly by the operation of the engine 8 or the propulsion assembly.

For example, specifically, the sound transmission line 24 comprises a duct 26 communicating with the intake line 11 downstream of the compressor, so as to conduct compressed air to a resonator device 27 of the sound transmission line 24. Furthermore, the sound transmission line 24 comprises a further duct 28 which connects the resonator device 27 to the inlet 23. The resonator device 27 comprises a deformable element (not illustrated) which fluidically isolates the ducts 26, 28 from each other; the deformable element, for example comprising a membrane or diaphragm, is arranged to vibrate due to the compressed air in the duct 26, thereby stimulating the generation of sound pressure waves in the duct 28, so that the sound pressure waves propagate in the duct 28 to reach the inlet 23. Here, therefore, the harmonic force is composed of the pressure in the air compressed by the compressor.

In a similar manner, for example, the sound transmission line 25 comprises a duct 29 communicating with the exhaust line 12 downstream of the turbine and upstream of the post-treatment apparatus 14, so as to conduct expanded exhaust gases from the turbine to a resonator device 30 of the sound transmission line 25. Thus, the sound transmission line 25 comprises a further duct 31 which connects the resonator device 30 to the inlet 23. The resonator device 30 comprises a deformable element (not illustrated) which fluidically isolates the ducts 31, 29 from each other; the deformable element, for example comprising a membrane or diaphragm, is arranged to vibrate due to the turbulence of the exhaust gases in the duct 29, thereby stimulating the generation of sound pressure waves in the duct 31, so that the sound pressure waves propagate in the duct 31 to reach the inlet 23. Here, therefore, the harmonic force is composed of the turbulence of the exhaust gases in the duct 29.

The sound transmission lines 24, 25 could have a different construction from that set forth by way of non-limiting example; for the purposes of the invention, the sound transmission lines 24, 25 could be absent, since the inlet 23 is anyway configured to receive sound pressure waves, regardless of the source of such waves. In other words, the inlet 23 is capable of picking up sounds inside the engine compartment 6, i.e. of receiving sound pressure waves generated in the engine compartment 6.

The sound conveying duct 22 generally has the function of conveying the sound pressure waves received from the inlet 23 into the passenger compartment 5.

The sound conveying duct 22 has at least one distribution portion 32 which extends starting from the inlet 23 along an axis K, for example curvilinear or straight.

Preferably, the distribution portion 32 extends along the axis K partially inside the engine compartment 6 starting from the inlet 23 and partially in the compartment 21, therefore it passes through the firewall 15 in a through manner, i.e. passes through the firewall 15.

The axis K has at least one longitudinal component, i.e. has a non-zero projection on the roll axis X. For example, inside the compartment 21, the axis K could have a straight segment and more in particular parallel to the axis X. More generally, the axis K in the compartment 21 has at least one longitudinal extension according to the axis X, namely extends longitudinally according to the axis X. This does not mean that the axis K is perfectly straight and/or parallel to the axis X in the compartment 21, but that the axis K has at least one component parallel to the axis X, i.e. has a non-zero projection on the axis X.

The sound conveying duct 22 divides into several (namely at least two) disjoint branches 34 at the end or immediately downstream of the distribution portion 32. The end of the distribution portion 32, opposite the inlet 23 according to the axis K, thus defines a division node from which the branches 34 extend or develop according to or along respective branch axes W, parallel to each other and to the distribution portion 32.

For example, the expression "disjoint" means devoid of volumes in common, therefore the intersection of the disjoint branches 34 is empty. In other words, for example, the branches 34 do not communicate per se or are per se isolated from each other, unless connected to each other by means of the distribution portion 32.

Downstream of the division node, more precisely immediately downstream of the division node, the respective inner and/or outer walls (more generally the respective walls) of the branches 34 divide from each other, so as to be completely separated or disjointed from each other.

In fact, in practice, the branches 34 are distinct pipes that connect or merge at the division node or form a connection thereat, for example defined by the division node. In particular, the pipes divide from each other at the division node forming or tracing curves that move away according to distinct directions from the distribution portion 32, in turn defined by another distinct pipe.

From here on, expressions such as "upstream of" and "downstream of" are to be understood with reference to the direction of propagation of the sound pressure waves along the sound conveying duct 22 from the inlet 23 to the passenger compartment 5.

The branches 34 extend along the branch axes W at least in part in the compartment 21 and more preferably entirely in the compartment 21.

Specifically, for example, the sound conveying duct 22 forks into two branches 34.

The branches 34 start from the division node and terminate with divergent portions 35, in turn extending along the axes W up to discharging at one or more, in particular two, through-openings 36 of the interior trim panel 16.

The through-openings 36 communicate (in particular directly) with the passenger compartment 5. In other words, the through-openings 36 could be exposed inside the passenger compartment 5.

Preferably, the through-openings 36 face upwards (according to the yaw axis) and/or are obtained on an upper end 37 of the interior trim panel 16. In particular, the through-openings 36 are arranged in a symmetrical manner with respect to a vertical middle plane (plane of the axes X, Z) of the motor vehicle 1. According to examples not illustrated, the through-openings 36 could be contiguous with each other according to the axis Y, so as to form one single opening resulting from the joining of the through-openings 36. Optionally, the through-openings 36 are engaged by grilles (not illustrated) or similar interior trim elements that have the function of occupying the area of the through-openings 36, while allowing air transpiration.

Preferably, the upper end 37 of the interior trim panel 16 constitutes or comprises a base for the rear window 19, therefore the through-openings 36 are arranged at the rear window 19 (in particular according to the axis Z), i.e. more precisely are at the height of a lower end of the rear window 19, according to the axis Z.

Alternatively or additionally, the through-openings 36 face towards the roof 20 and/or the rear window 19.

Preferably, the axes W at the through-openings 36 are vertical or parallel to the axis Z. In other words, the axes W point upwards at the through-openings 36.

Preferably, the axes W have at least respective segments extending laterally with respect to the axis K, i.e. according to the axis Y or on a plane parallel to the plane of the axes Y, Z.

Conveniently, according to the axis Y, the through-openings 36 are located at least in part or more preferably entirely in the first quarters of the overall width of the interior trim panel 16 (according to the axis Y) from the vertical middle plane.

The divergent portions 35 have a progressively divergent configuration according to the related axes W, in particular strictly divergent (a configuration not strictly divergent but anyway divergent can provide for zones with a constant section besides at least one or more strictly divergent zones, for example between strictly divergent zone), towards the through-openings 26 or up to terminating on the through-openings 26.

Upstream of the divergent portions 35, the branches 34 are preferably devoid of further divergent portions; in other words, the remaining part of the branches 34 has, according to the related axes W, a convergent configuration towards the divergent portions 35 (the convergent configuration can provide for zones with a constant section besides at least one or more strictly convergent zones, for example between strictly convergent zones) and/or entirely with constant section.

Here and in the foregoing, the expression "constant section" refers to the area of the cross-section or orthogonal section with respect to the related of the axes W.

According to the divergent configuration, the area of the cross-section or orthogonal to the related of the axes W increases or is increasing; according to the convergent configuration, the area of the cross-section or orthogonal to the related of the axes W decreases or is decreasing.

The expression "progressively" refers to the fact that the area of the cross-section or orthogonal to the related of the axes W increases in a gradual manner, namely without jumps, namely the increase in the area mathematically satisfies a derivability condition.

The presence of the divergent portions 35 is advantageous for the purpose of reducing the sound intensity losses in the passenger compartment.

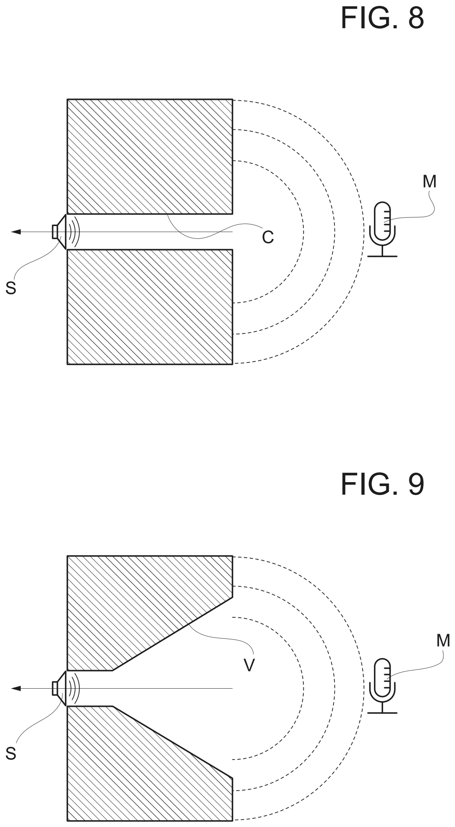

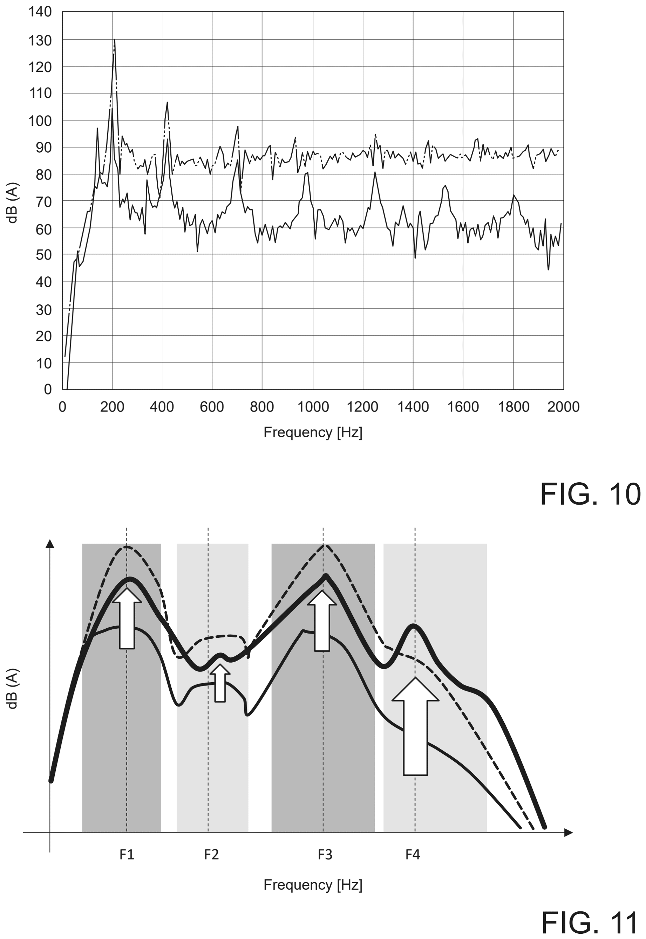

The graph in Figure 10 refers to an experiment conducted by the Applicant which demonstrates what stated in the paragraph above. Figure 10 is a graphical representation of frequency spectra (sound frequency-intensity graph), measured by means of microphones M downstream of the respective ducts C, V, as illustrated in the related Figures 8, 9, related to sounds emitted with identical properties from sound sources S immediately upstream of the ducts C, V.

The horizontal axis of the graph in Figure 10 (frequency axis) represents the values of the frequencies in hertz (Hz), whereas the vertical axis of the graph in Figure 10 (sound intensity or amplitude A axis) represents the values of the sound intensities or amplitudes in decibels (dB) associated with the corresponding frequencies.

In Figure 10, the line associated with higher intensities (represented in dB), starting from frequencies higher than 200 Hz, is that representative of the frequency spectrum related to the sound conveyed through the duct V, whereas the other line associated with significantly lower intensities for most frequencies relates to the sound conveyed through the duct C.

The duct C has a configuration with a constant section, therefore the variation in section at the outlet point, where the microphone M is present, is more abrupt than in the case of the duct V with a divergent configuration, in particular strictly divergent.

Therefore, the configuration of the duct C generates a greater sound intensity loss downstream of the duct C, with respect to the case of the duct V.

The branches 34 have connecting ends 38 which connect to the distribution portion 32 at the division node, therefore in greater detail the divergent portions 35 define opposite ends of the branches 34 with respect to the connecting ends 38 according to the related axes W.

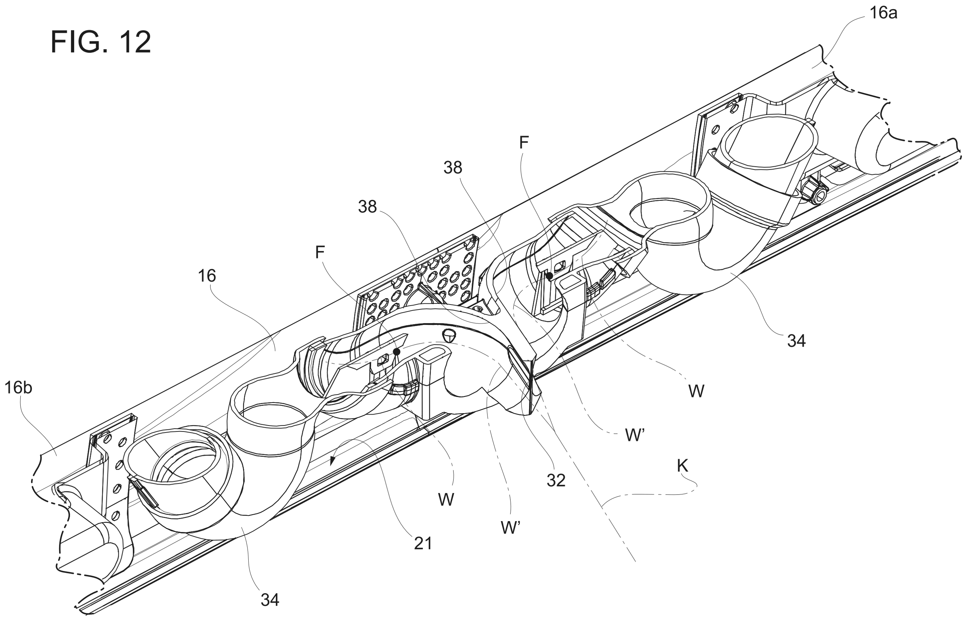

The connecting ends 38 (Figure 12) originate from the division node with respective cross-sections or orthogonal sections with respect to the axes W. In other words, the latter cross-sections are the very first sections of the connecting ends 38, namely the inlet sections of the connecting ends 38 or the branches 34.

Such sections, which can be called branch sections, therefore, communicate directly with the distribution portion 32 or also form part of the distribution portion 32, i.e. define the shared boundaries or limits between the distribution portion 32 and the branches 34.

The branch sections, as well as preferably all the cross-sections of the connecting ends 38 or more generally of the branches 34 with respect to the related axes W, are preferably closed, for example with circular or rectangular shapes, i.e. more generally elliptical or prismatic.

Conveniently, such branch sections intersect or, more in particular, are coplanar to a cross-section or orthogonal section of the distribution portion 32 with respect to the axis K.

The distribution portion 32 terminates on the division node, therefore the cross-section of the distribution portion 32, at the division node, defines a terminal area of the distribution portion 32.

The branch sections define respective branch areas.

For example, the branch areas are coplanar to the terminal area, namely the branch areas and the terminal area belong to a same section plane (transverse or orthogonal to the axis X) orthogonal to the axis K and in particular also orthogonal to the end points of the axes W. In other words, the branch areas or the branch sections are each a sub-set of the terminal area or of the cross-section of the distribution portion 32 at the division node. Also in other words, the branch sections are each contained by the terminal area or form part of the terminal area, in particular on the section plane.

Advantageously, the branch areas (i.e. the dimensions of the areas of the branch sections) are each smaller than or at most equal to the terminal area (i.e. the dimension of the area of the cross-section of the distribution portion 32 on the division node with respect to the axis K).

Alternatively or additionally, the branches 34 extend respectively along the axes W from the division node up to the beginning (namely up to respective initial cross-sections or orthogonal sections with respect to the axes W) of the divergent portions 35, or up to cross-sections immediately upstream of the divergent portions 35, with constant section, i.e. with constant areas of the cross-sections or orthogonal sections of the branches 34 with respect to the axes W, or even extend more generally with a convergent configuration (from the division node towards the beginning of the divergent portions 35) according to the axes W, optionally strictly convergent (the convergent configuration can provide for zones with a constant section besides at least one or more strictly convergent zones).

More generally, the branches 34 can respectively extend with constant section or convergent configuration up to the beginning of generic branch portions (specifically the divergent portions 35) of the branches 34, i.e. downstream portions, with (for example strictly) divergent configuration according to the axes W towards the through-openings 36. In fact, according to embodiments not illustrated, the branches 34 could respectively and independently have further branch portions with (for example strictly) divergent configuration upstream of the divergent portions 35, i.e. between the division node and the divergent portions 35. Here, the branches 34 would have respective segments with constant section or convergent configuration which connect the related branch portions with divergent configuration to the division node.

In this manner, the sound pressure waves conveyed through the division node on the branches 34 do not undergo free expansions, at least up to the divergent portions 35 or the aforementioned branch portions, so that the sound intensity losses are minimized.

In particular, the connecting ends 38 extend with constant section or convergent configuration.

Preferably, the axes W have fillet arcs W' at the connecting ends 38. In other words, the connecting ends 38 extend along the fillet arcs W', i.e. have the fillet arcs W' as their own axes. The fillet arcs W' are connected at their end points on the axis K. In other words, the fillet arcs W' all start from an extreme point of the axis K (the extreme point defining, in practice, the division node), in a tangent manner or tangentially with respect to the axis K, and divide from each other at the division node, in particular terminating with respective ends transverse or orthogonal to the axis K. On the division node, the fillet arcs W' are tangent to the axis K.

In particular, the fillet arcs W' make respective curves in the compartment 21, more in particular on a plane parallel to the plane of the axes X, Y, i.e. a horizontal plane. For example, the curves made by the fillet arcs W' advance, at least initially from the division node, along the axis X or starting from the axis K and are directed according to the axis Y or transversely with respect to the axis K (namely so as to move away from the axis K according to respective directions transverse to the axis K), in particular towards respective lateral ends 16a, 16b, more in particular opposite each other according to the axis Y, of the interior trim panel 16.

Clearly, the inner walls of the connecting portions 38, i.e. the walls that in actual fact delimit the inside of the connecting portions 38, axially follow the profile of the fillet arcs W'.

Downstream of the fillet arcs W', the axes W preferably continue on a plane parallel to the plane of the axes Y, Z, i.e. on a vertical plane.

At least along the fillet arcs W', the branches 34 can preferably extend with a constant or more generally convergent, optionally strictly convergent section.

Preferably, the axes W (or also possibly only one of them) are curvilinear and provided with one or more inflection points F, i.e. points where a change in the orientation of the curvature of the axes W occurs.

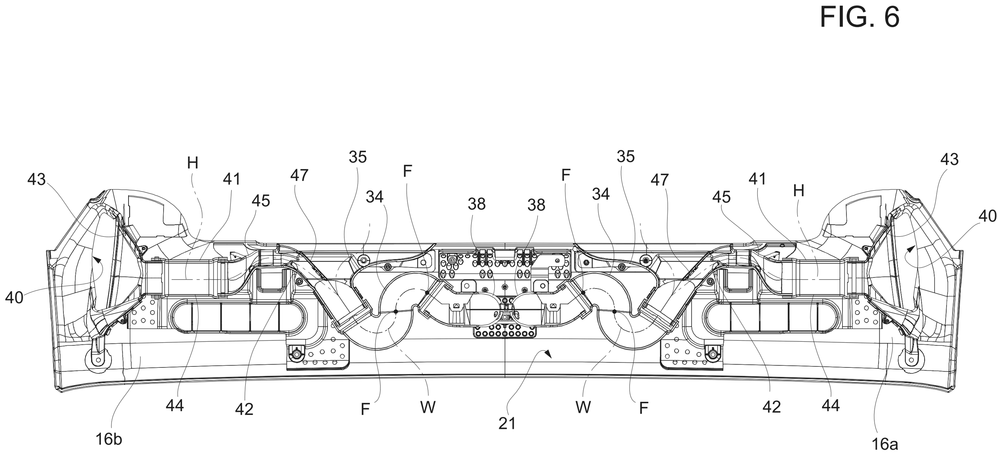

For example, a first inflection point F (Figure 12) can be an opposite extreme, with respect to the division node, of one of the fillet arcs W'. At least another or other two inflection points F (Figure 6) can be downstream of the fillet arc W'.

By means of the inflection points F, the branches 34 develop in a wavy or serpentine manner along the axes W, so that their length along the axes W can be elevated, while maintaining a reduced bulk according to the axis Y.

Conveniently, the lateral ends 16a, 16b are provided with lateral through-openings 40 which communicate with the passenger compartment 5 and in particular with its respective lateral end zones. The lateral openings 40 communicate (in particular directly) with the passenger compartment 5. In other words, the lateral openings 40 could be exposed inside the passenger compartment 5. The fact that the openings 40 are lateral and belonging to the lateral ends 16a, 16b is not strictly necessary in some embodiments, therefore more in general the openings 40 could simply be additional (essentially second through-openings 40, besides the first through-openings 36) with respect to the through-openings 36 and more generally form part of the interior trim panel 16, while anyway communicating with the passenger compartment 5, in particular directly.

For example, the lateral openings 40 are delimited at least in part by lateral extreme edges, according to the axis Y, of the lateral ends 16a, 16b.

The through-openings 36 are located (in particular, altogether or as a whole) between the lateral openings 40 according to the pitch axis Y.

For example, the lateral openings 40 are aligned with each other according to the axis Y.

More precisely, according to the axis Y, the lateral openings 40 are located at least in part or more preferably entirely in the last quarters of the overall width of the interior trim panel 16 (according to the axis Y) from the vertical middle plane.

Preferably, the lateral openings 40 are arranged further down, according to the axis Z, than the through-openings 36. In particular, the lateral openings 40 are arranged in a symmetrical manner with respect to the vertical middle plane. Optionally, the lateral openings 40 are engaged by grilles (not illustrated) or similar interior trim elements that have the function of occupying the area of the lateral openings 40, while allowing air transpiration.

The motor vehicle 1 comprises lateral ducts 41 having connecting portions 42 which connect to the branches 34, in particular respectively, with a configuration parallel to the divergent portions 35.

In other words, the lateral ducts 41 connect to the branches 34 upstream of the divergent portions 35, for example at connection nodes, from which the divergent portions 35 and the connecting portions 42 start parallel to each other.

The lateral ducts 41 extend along respective axes H starting from or from the connecting portions 42 up to discharging respectively on the lateral openings 40.

In particular, the lateral ducts 41 extend along the axes H up to terminating with divergent portions 43, in turn extending along the axes H up to discharging at the lateral openings 40.

The divergent portions 43 have a divergent configuration according to the related axes H, in particular strictly divergent, towards the lateral openings 40 or up to terminating on the lateral openings 40.

Preferably, at the lateral openings 40, the axes H have at least one component parallel to the axis X, i.e. have a non-zero projection on the axis X.

For example, the divergent portions 43 are preceded by respective portions 44 with constant section, in turn preceded by further divergent portions 45 with (in particular strictly) divergent configuration towards the portions 44, respectively.

Conveniently, the length of the lateral ducts 41 along the axes H is different from (in particular less than) the length of the branches 34 along the axes W, more in particular different from a multiple or divisor of the length of the branches 34.

The lateral ducts 41 are in fact advantageous because they operate as resonators enhancing specific frequencies of the sound pressure waves as a function of the length along the axes H. More precisely, the portion of the sound pressure waves exiting the lateral openings 40 in the passenger compartment 5 has frequency spectra with increased intensities with respect to the sound pressure waves entering through the inlet 23 at specific frequencies associated (directly, according to an inverse proportional relationship) with the length of the lateral ducts 41 along the axes H.

Furthermore, the lateral ducts 41 are advantageous as they provide a binaural perception of the sound in the passenger compartment 5, since a part of the sound pressure waves enters the passenger compartment 5 substantially centrally by means of the through-openings 36 and laterally by means of the lateral openings 40.

The lateral ducts 41 could be considered as forming part of the sound conveying duct 22.

The lateral ducts 41 could also be independent of the configuration of the branches 34, therefore they could also be applied to the solution in Figure 13, in an innovative manner.

Preferably, the motor vehicle 1 or the sound conveying duct 22 comprises dividing partitions or dividing walls 47 laterally (according to the axis Y) dividing the divergent portions 35 and the connecting portions 42, respectively. In other words, the dividing partitions 47 directly separate the divergent portions 35 and the connecting portions 42. Namely, the dividing partitions 47 have faces 47a partially delimiting the divergent portions 35 and opposite faces 47b which partially delimit the connecting portions 42.

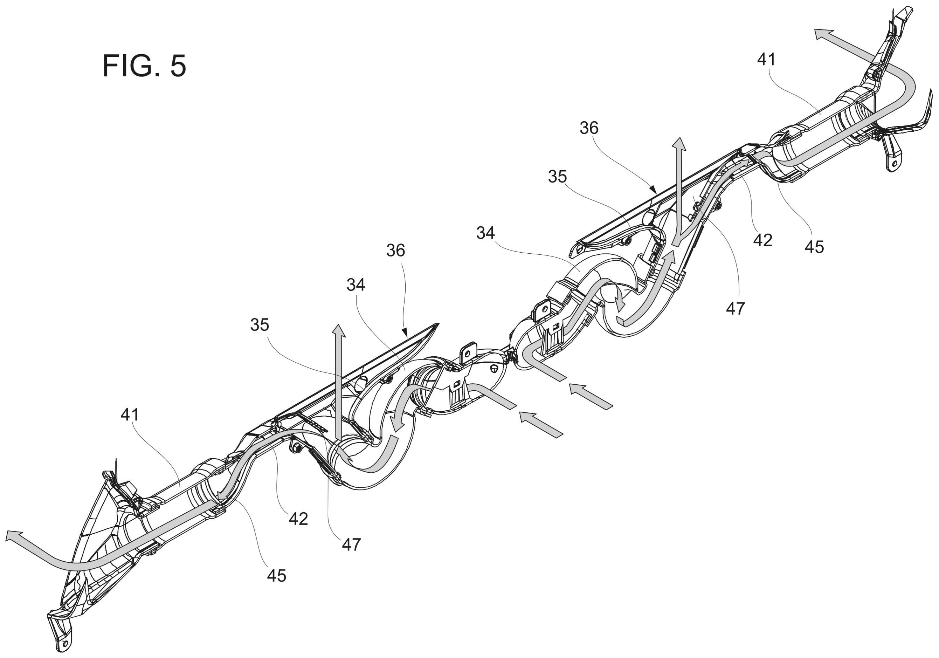

In the illustrated embodiment, in particular in Figure 5, the dividing partitions 47 produce section constrictions or narrowing in the branches 34 at the beginning or immediately upstream of the divergent portions 35.

Similarly, although independently, the dividing partitions 47 involve the fact that the connecting portions 42 connect to the branches 42 with cross-sections or orthogonal sections with respect to the axes H reduced with respect to the cross-sections of the branches 42 with respect to the axes W at the connection nodes, namely at the zone where the connecting portions 42 connect to the branches 34.

Specifically, the motor vehicle 1 or the sound conveying duct 22 has an expansion box 50 for each branch 34. The divergent portion 35 of this branch 34 and the connection portion 42 connecting onto the same branch 34 are respective interior volumes of the expansion box 50, which therefore has an outlet at one of the through-openings 36, an inlet communicating with the remaining part of the branch 34 besides the divergent portion 35, and another outlet communicating with the remaining part of the lateral duct 41 besides the connection portion 42.

The expansion box 50 comprises internally or on its inside one of the dividing partitions 47, which is arranged to divide the interior volumes of the expansion box 50.

Based on the foregoing, the advantages of the motor vehicle 1 according to the invention are evident.

The configuration of the branches 34 and their connection to the distribution portion 32 is such as to prevent sound intensity losses in the conveying of the sound pressure waves due to free expansions in the passage from the distribution portion 32 to the branches 34.

This is evident in particular in Figure 11 which represents the frequency spectra (frequency-intensity diagram) measured experimentally in the passenger compartment 5, for example by means of microphones, downstream of the sound conveying duct 22 according to the present invention and to the previous solution represented in Figure 13, starting from upstream sounds emitted with the same properties.

The horizontal axis of the graph in Figure 11 (frequency axis) represents the values of the frequencies in hertz (Hz), whereas the vertical axis of the graph in Figure 11 (sound intensity or amplitude A axis) represents the values of the sound intensities or amplitudes in decibels (dB) associated with the corresponding frequencies.

Figure 11 unequivocally shows how the thicker line, representing the sound downstream of the sound conveying duct 22 according to the present invention, has higher intensity levels than the thinner line, associated with the solution represented in Figure 13, substantially for all frequencies and in particular at the multiples of the fundamental or carrier frequency of the emitted sound. The dashed line in Figure 11 represents the frequency spectrum measured at the rear of the firewall 15, facing the engine compartment 6. The thick line comes particularly close to the dashed line, which represents a confirmation of the effectiveness of the invention.

The lateral ducts 41 further allow the enhancement of specific frequencies that would otherwise result to be not perceivable in the passenger compartment 5, due to significant intensity losses specifically associated with such frequencies. For example, Figure 11 shows the enhancement of an original frequency, symbolically identified by the value F4, otherwise not possible by means of the previous solution in Figure 13.

Finally, it is clear that modifications and variations can be made to the motor vehicle 1 according to the invention which anyway do not depart from the scope of protection defined by the claims.

In particular, the number and the shape of each of the described and illustrated components could be different, with particular reference to the branches 34, lateral openings 40, through-openings 36, and the like.

The firewall 15 is here specifically arranged at a rear portion of the motor vehicle 1, since the motor vehicle 1 is here specifically a rear drive motor vehicle. However, this is not limiting, since the invention could also be applied to a front drive motor vehicle and thus with a firewall arranged at a front portion of the motor vehicle.

Furthermore, the various embodiments or the described examples can be extrapolated and combined individually with one another without any limitations, with particular reference to the various characteristics individually described in the various paragraphs of the description.

Now, several possible aspects of the description will follow, which could be considered in an independent manner of what described above or in combination with what described above.

According to a possible first aspect, the motor vehicle 1 comprises
- an engine 8
- an engine compartment 6 housing the engine 8,
- a passenger compartment 5,
- a firewall 15,
- an interior trim panel 16 having a thickness, a first face 17 facing the passenger compartment 5, and a second face 18 opposite the first face 17 according to a direction of the thickness and facing the firewall 15, thereby delimiting at least in part a compartment 21 between the trim panel 16 and the firewall 15, the firewall 15 separating the compartment 21 from the engine compartment 6,
- a sound conveying duct 22 having an inlet 23 at the engine compartment 6 to receive one or more sound pressure waves and extending according to at least one distribution portion 32 along a first axis K up to dividing at a division node into at least two disjoint branches 34 extending at least in part in the compartment 21 along respective branch axes W up to discharging at one or more first through-openings 36 of the trim panel 16 with respective divergent portions 35 having a progressively divergent configuration according to the related branch axes W towards the first through-openings 36, the first through-openings 36 communicating with the passenger compartment 5,

characterized in that the branches 34 have connecting ends 38 connected to the distribution portion 32 at the division node and originating from the division node with respective branch cross-sections with respect to the related branch axes W, the branch cross-sections defining branch areas smaller than or at most equal to a terminal area of a cross-section of the distribution portion 32 with respect to the first axis K at the division node,
and/or in that the branches 34 extend respectively along the branch axes W, from the division node up to the beginning of the divergent portions 35 or of branch portions of the branches 34 with divergent configuration according to the related branch axes W towards the first through-openings 36, with constant areas of the cross-sections of the branches 34 with respect to the branch axes W or with a convergent configuration according to the related branch axes W towards the beginning of the divergent portions 35.

In a possible second preferred aspect, according to said first aspect, said branch areas and the terminal area belong to a same section plane orthogonal to the first axis K.

In a possible third preferred aspect, according to said first or said second aspect, the branch axes W have fillet arcs W' at the connecting ends 38, wherein the fillet arcs W' divide from each other starting tangentially from the first axis K at the division node.

In a possible fourth preferred aspect, according to any of said aspects from the first to the third aspect, the distribution portion 35 extends partially in the engine compartment 6 starting from the inlet 23 and partially in the compartment 21 passing through the firewall 15, whereby the division node is located in the compartment 21.

In a possible fifth preferred aspect, according to said fourth aspect, the first axis K extends in the compartment 21 substantially longitudinally according to a roll axis X of the motor vehicle, the branch axes W having respective segments extending laterally with respect to the first axis K.

In a possible sixth preferred aspect, according to any of said aspects from the first to the fifth aspect, the branch axes W point upwards at the first openings 36.

In a possible seventh preferred aspect, according to any of said aspects from the first to the sixth aspect, at least one of the branch axes W is curvilinear and provided with one or more inflection points F, preferably at least two or at least three inflection points F.

In a possible eighth preferred aspect, according to any of said aspects from the first to the seventh aspect, the interior trim panel 16 has two lateral ends 16a, 16b opposite each other according to a pitch axis Y of the motor vehicle, the lateral ends 16a, 16b being provided with respective lateral through-openings 40 communicating with respective lateral end zones of the passenger compartment 5, wherein the first openings 36 are located between the lateral openings 40 according to the pitch axis Y, the motor vehicle 1 further comprising lateral ducts 41 having further connecting portions 42 connecting respectively to the branches 34 with a configuration parallel to the divergent portions 35 and extending along respective second axes H from the connecting portions 42 up to discharging respectively at the lateral openings 40 with respective further divergent portions 43 having a progressively divergent configuration according to the related second axes H towards the lateral openings 40, respectively.

In a possible ninth preferred aspect, according to said eighth aspect, the motor vehicle 1 further comprises respective dividing partitions 47 laterally dividing the divergent portions 35 of said branches 34 from further connecting portions 42 of the lateral ducts 41.

In a possible tenth preferred aspect, according to said ninth aspect, each of the divergent portions 35 and each of the further connecting portions 42 of the lateral ducts 41 are defined by respective interior volumes of an expansion box 50 having a first outlet at one of the first openings 36, a second outlet on the remaining portion of the related of the lateral ducts 41 besides the related of the further connecting portions 42, and an inlet communicating with the remaining portion of the related of the branches 34 besides the related of the divergent portions 35, the expansion box 50 further comprises internally one of the dividing partitions 47 arranged to divide said interior volumes from each other.

In a possible eleventh preferred aspect, according to any of said aspects from the first to the tenth aspect, the first openings 36 are arranged at a rear window 19 of the motor vehicle, or face a roof 20 and/or a rear window 19 of the motor vehicle 1.

## Claims

1. Motor vehicle (1) comprising
- an engine (8)
- an engine compartment (6) housing the engine (8),
- a passenger compartment (5),
- a firewall (15),
- an interior trim panel (16) having a thickness, a first face (17) facing the passenger compartment (5), and a second face (18) opposite the first face (17) according to a direction of the thickness and facing the firewall (15), thereby delimiting at least in part a compartment (21) between the trim panel (16) and the firewall (15), the firewall (15) separating the compartment (21) from the engine compartment (6),
- a sound conveying duct (22) having an inlet (23) at the engine compartment (6) to receive one or more sound pressure waves and extending according to at least one distribution portion (32) along a first axis (K) up to dividing at a division node into at least two disjoint branches (34) extending at least in part in the compartment (21) along respective branch axes (W) up to discharging at one or more first through-openings (36) of the trim panel (16) with respective divergent portions (35) having a progressively divergent configuration according to the related branch axes (W) towards the first through-openings (36), the first through-openings (36) communicating with the passenger compartment (5),
**characterized by** further comprising lateral ducts (41) having connecting portions (42) connecting respectively to the branches (34) with a configuration parallel to the divergent portions (35) and extending along respective second axes (H) from the connecting portions (42) up to discharging respectively at second through-openings (40) of the trim panel (16), the second through-openings (40) communicating with the passenger compartment (5).

2. The motor vehicle according to claim 1, wherein the lateral ducts (41) discharge at the second through-openings (40) with respective further divergent portions (43) having a progressively divergent configuration according to the related second axes (H) towards the second through-openings (40), respectively.

3. The motor vehicle according to claim 1 or 2, wherein the first through-openings (36) are located altogether between the second through-openings (40) according to a pitch axis (Y) of the motor vehicle (1).

4. The motor vehicle according to any of the preceding claims, wherein the interior trim panel (16) has two lateral ends (16a, 16b) opposite each other according to a pitch axis (Y) of the motor vehicle, the lateral ends (16a, 16b) being provided with respective lateral through-openings (40) defined by the second through-openings (40) and communicating with respective lateral end zones of the passenger compartment (5).

5. The motor vehicle according to claim 4, wherein the lateral through-openings (40) are delimited at least in part by lateral extreme edges, according to the pitch axis (Y), of the lateral ends (16a, 16b).

6. The motor vehicle according to any of the preceding claims, wherein the length of the lateral ducts (41) along the second axes (H) is different from the length of the branches (34) along the branch axes (W).

7. The motor vehicle according to any of the preceding claims, wherein the length of the lateral ducts (41) along the second axes (H) is less than the length of the branches (34) along the branch axes (W).

8. The motor vehicle according to any of the preceding claims, wherein the length of the lateral ducts (41) along the second axes (H) is different from a multiple or divisor of the length of the branches (34) along the branch axes (W) .

9. Motor vehicle (1) comprising
- an engine (8)
- an engine compartment (6) housing the engine (8),
- a passenger compartment (5),
- a firewall (15),
- an interior trim panel (16) having a thickness, a first face (17) facing the passenger compartment (5), and a second face (18) opposite the first face (17) according to a direction of the thickness and facing the firewall (15), thereby delimiting at least in part a compartment (21) between the trim panel (16) and the firewall (15), the firewall (15) separating the compartment (21) from the engine compartment (6),
- a sound conveying duct (22) having an inlet (23) at the engine compartment (6) to receive one or more sound pressure waves and extending according to at least one distribution portion (32) along a first axis (K) up to dividing at a division node into at least two disjoint branches (34) extending at least in part in the compartment (21) along respective branch axes (W) up to discharging at one or more first through-openings (36) of the trim panel (16) with respective divergent portions (35) having a progressively divergent configuration according to the related branch axes (W) towards the first through-openings (36), the first through-openings (36) communicating with the passenger compartment (5),
**characterized in that** the branches (34) have connecting ends (38) connected to the distribution portion (32) at the division node and originating from the division node with respective branch cross-sections with respect to the related branch axes (W), the branch cross-sections defining branch areas smaller than or at most equal to a terminal area of a cross-section of the distribution portion (32) with respect to the first axis (K) at the division node,
and/or **in that** the branches (34) extend respectively along the branch axes (W), from the division node up to the beginning of the divergent portions (35) or of branch portions of the branches (34) with divergent configuration according to the related branch axes (W) towards the first through-openings (36), with constant areas of the cross-sections of the branches (34) with respect to the branch axes (W) or with a convergent configuration according to the related branch axes (W) towards the beginning of the divergent portions (35).

10. The motor vehicle according to claim 9, wherein said branch areas and the terminal area belong to a same section plane orthogonal to the first axis (K).

11. The motor vehicle according to claim 9 or 10, wherein the branch axes (W) have fillet arcs (W') at the connecting ends (38), wherein the fillet arcs (W') divide from each other starting tangentially from the first axis (K) at the division node.

12. The motor vehicle according to any of the claims from 9 to 11, wherein the distribution portion (35) extends partially in the engine compartment (6) starting from the inlet (23) and partially in the compartment (21) passing through the firewall (15), whereby the division node is located in the compartment (21).

13. The motor vehicle according to claim 12, wherein the first axis (K) extends in the compartment (21) substantially longitudinally according to a roll axis (X) of the motor vehicle, the branch axes (W) having respective segments extending laterally with respect to the first axis (K).

14. The motor vehicle according to any of the claims from 9 to 13, wherein the branch axes (W) point upwards at the first openings (36).

15. The motor vehicle according to any of the claims from 9 to 14, wherein at least one of the branch axes (W) is curvilinear and provided with one or more inflection points (F), preferably at least two or at least three inflection points (F).
